# FASCICULE DE BREVET EUROPEEN

(11) **EP 1 754 339 B1**
(45) Date de publication et mention de la délivrance du brevet: **29.04.2009**
(21) Numéro de dépôt: 04767316.5
(22) Date de dépôt: 10.06.2004
(51) Int. Cl.: H04L 12/56, H04L 12/24

(54) **PROCEDE DE GESTION DE CONTROLE SELON UN PROTOCOLE DE ROUTAGE**
VERFAHREN ZUR STEUERUNGSVERWALTUNG AUF DER BASIS EINES ROUTING-PROTOKOLLS
METHOD FOR CONTROL MANAGEMENT BASED ON A ROUTING PROTOCOL

(43) Date de publication de la demande: 21.02.2007
(73) Titulaire: FRANCE TELECOM, 75015 Paris (FR)
(72) Inventeur: DUBOIS, Nicolas, F-92130 Issy Les Moulineaux (FR); FONDEVIOLE, Benoît, F-75016 Paris (FR); DECRAENE, Bruno, F-92170 Vanves (FR)
(74) Mandataire: Loisel, Bertrand
(86) Numéro de dépôt international: PCT/FR2004/001451
(87) Numéro de publication internationale: WO 2006/005816

(56) Documents cités:
- EP-A- 1 414 199
- WO-A-02/06918

## Description

La présente invention est relative au domaine des télécommunications, et plus particulièrement des protocoles de routage et des équipements de réseau mettant en oeuvre de tels protocoles.

Un réseau de télécommunication classique comprend des équipements de réseau, appelés routeurs, ayant pour fonction d'optimiser la transmission des paquets. En effet, la transmission d'un paquet depuis un équipement jusqu'à un autre équipement dans le réseau peut généralement être réalisée suivant plusieurs chemins. Les routeurs permettent d'optimiser la transmission de paquets en sélectionnant suivant des critères déterminés le meilleur chemin de transmission parmi des chemins de transmission possibles. Un routeur sélectionne un tel chemin de transmission sur la base d'informations généralement reçues selon un protocole de routage et mémorisées dans des tables de routage. Un protocole de routage est un protocole qui fournit des mécanismes permettant à un routeur de construire une table de routage et de partager des informations de routage avec d'autres routeurs voisins, c'est-à-dire des routeurs avec lesquels il entretient une session selon le protocole de routage. Il existe plusieurs types de protocoles de routage qui utilisent des méthodes différentes pour aider le routeur à collecter des informations de routage.

On connaît par exemple un protocole de routage nommé BGP (« Border Gateway Protocol ») très largement utilisé dans les réseaux, notamment de type Internet. Les routeurs qui implémentent le protocole BGP sont généralement déployés de façon redondante. Ainsi, les informations de routage transportées dans le protocole de type BGP sont souvent accessibles depuis plusieurs points du réseau.

Lors d'une extinction d'un routeur, le trafic transitant par ce routeur est re-routé vers un autre équipement de réseau. Cette opération de re-routage est aussi appelée "convergence du protocole de routage".

Pendant une convergence de protocole de routage, des paquets sont susceptibles d'être perdus. En effet, la convergence des routeurs n'étant pas instantanée, une extinction d'un routeur cause la perte de paquets qui sont encore routés via le routeur éteint et donc hors service.

On connaît des techniques qui tentent d'améliorer cette situation. Ainsi, une technique appelée 'Graceful Restart BGP', tente de réduire les pertes de paquets pendant la convergence de protocole de routage BGP d'un routeur.

Cette technique est basée sur une architecture de routeur comprenant un plan de contrôle et un plan de transfert. Ainsi, pendant que le plan de contrôle d'un routeur n'est pas en fonctionnement, pour maintenance par exemple, des paquets transitant par le routeur sont toujours transférés selon les informations de routage déjà connues. Cette technique est bien adaptée pour une maintenance du plan de contrôle d'un routeur.

Toutefois, cette technique ne permet pas de couvrir tous les cas de maintenance. En effet, cette technique étant basée sur le fonctionnement du plan de transfert, lorsque le plan de transfert n'est pas en fonctionnement, des paquets peuvent malgré tout être perdus. De plus, la mise en oeuvre d'une telle technique requiert une modification du fonctionnement du protocole de routage et s'avère donc être relativement complexe.

Le document WO 02/06918 décrit une méthode visant à réduire la perte de paquets lors d'une fermeture anticipée de sessions sur un routeur. Toutefois, cette méthode est basée sur la mise en oeuvre d'un protocole de routage à état de lien, qui reste inadaptée pour un réseau basé sur un protocole de routage à vecteur de distance. En outre, la méthode divulguée dans ce document est mise en oeuvre sur la base d'un message qui lui est spécifique et le traitement de ce message reste complexe.

Ainsi, il est intéressant de réduire la perte de paquets lors de l'extinction d'un routeur par une méthode simple à mettre en oeuvre et couvrant de plus larges cas de maintenance.

La présente invention vise à proposer une solution tendant à satisfaire ces besoins.

Un premier aspect de l'invention propose un procédé de contrôle de session selon un protocole de routage dans un réseau de transmission de paquets comprenant une pluralité de routeurs ayant entre eux des sessions selon ledit protocole pour échanger des informations de routage et/ou de connectivité indiquant des chemins pour transmettre des paquets à travers le réseau, dans lequel chacun desdits routeurs maintient une première table de routage comprenant des informations envoyées à un autre desdits routeurs via ledit protocole, et une seconde table de routage comprenant des informations reçues depuis un autre desdits routeurs via ledit protocole,
ledit procédé comprenant les étapes suivantes pour fermer au moins une partie des sessions d'un routeur donné :
- lister les informations correspondant à ladite partie des sessions et contenues dans l'une au moins des première et seconde tables de routage ;
- envoyer un message de mise à jour selon ledit protocole indiquant à des routeurs voisins que les chemins indiqués dans lesdites informations sont considérés hors service;
- fermer ladite partie des sessions ;
et dans lequel ledit routeur continue de transmettre des paquets émis sur lesdits chemins considérés hors service jusqu'à l'étape de fermeture.

Un deuxième aspect de l'invention propose un procédé de maintenance d'un routeur dans un réseau de transmission de paquets comprenant une pluralité de routeurs ayant entre eux des sessions selon un protocole de routage pour échanger des informations de routage et/ou de connectivité indiquant des chemins pour transmettre des paquets à travers le réseau, dans lequel chacun desdits routeurs maintient une première table de routage comprenant des informations envoyées à un autre desdits routeurs via ledit protocole, et une seconde table de routage comprenant des informations reçues depuis un autre desdits routeurs via ledit protocole,
ledit procédé comprenant les étapes suivantes, pour un routeur donné :
- initier une maintenance correspondant à une partie donnée des sessions du routeur;
- fermer ladite partie des sessions du routeur, suivant un procédé selon le procédé ci-dessus ;
- réaliser ladite maintenance.

Un troisième aspect de l'invention propose un système de gestion de session comprenant des moyens agencés pour mettre en oeuvre un des procédés ci-dessus.

Un quatrième aspect de l'invention propose un routeur comprenant des moyens agencés pour opérer dans le système ci-dessus.

On notera que les termes 'chemins considérés hors service' indiqués par un routeur donné dans un message de mise à jour font référence aux chemins qui sont à considérer comme hors service par les routeurs voisins, mais qui ne sont pas encore effectivement hors service. En effet, jusqu'à l'étape de fermeture, les paquets sont encore routés via ces chemins.

Grâce à ces dispositions, on peut réduire la perte de paquets durant une convergence du protocole de routage. En effet, lorsque l'on souhaite arrêter tout ou partie des sessions d'un routeur, on informe les routeurs voisins des changements d'informations de routage via le protocole de routage. Par conséquent, sur réception de ces informations les routeurs voisins peuvent mettre à jour leurs tables de routage et on accélère ainsi la convergence du protocole de routage. Le nombre de paquets perdu peut alors être réduit.

Dans un mode de réalisation préféré, on ferme la partie des sessions lorsqu'un critère déterminé est rempli. Il en résulte un meilleur contrôle de la réduction de la perte de paquets durant une convergence du protocole. On peut ainsi fermer la partie des sessions lorsqu'on détecte que le nombre des paquets transitant sur les chemins indiqués hors service est sensiblement nul. Ou encore, on peut fermer la partie des sessions sur expiration d'un temporisateur.

Dans un mode de réalisation préféré, lorsqu'on ferme toutes les sessions d'un routeur, seules les informations contenues dans la première table de routage sont listées puis envoyées à des routeurs voisins.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre un procédé de gestion de session de protocole de routage selon un mode de réalisation de l'invention ;
- la figure 2 est un schéma d'une architecture du réseau selon un mode de réalisation de l'invention ;
- la figure 3 illustre un procédé de gestion de session avec temporisateur selon un mode de réalisation de l'invention.

Certains réseaux de télécommunication fonctionnant sous une seule administration technique, sont des réseaux unifiés. Alors que d'autres, de taille sensiblement plus grande en général, sont scindés en une pluralité de 'sousréseaux', chacun fonctionnant sous une administration technique propre, appelés 'système autonome'. Un système autonome est un ensemble de routeurs fonctionnant sous une seule administration technique, utilisant un protocole de routage intérieur et des informations de routage communes pour router les paquets à l'intérieur du système autonome. De tels routeurs utilisent par ailleurs un protocole de routage extérieur pour router les paquets vers les autres systèmes autonomes. Certains protocoles de routage sont adaptés pour être avantageusement utilisés en tant que protocole de routage intérieur et protocole de routage extérieur. Il en est ainsi des protocoles de routage de type BGP. Un protocole de routage de type BGP permet en effet d'avoir des sessions entre des routeurs d'un réseau de manière à assurer la cohérence des tables de routages sur tous les équipements à l'intérieur d'un domaine administratif donné et sur l'ensemble des domaines administratifs d'un réseau.

Un protocole de routage dérivé du protocole BGP est nommé MP-BGP, pour Multi Protocol BGP. Il fournit la possibilité aux systèmes autonomes de s'échanger des informations étendues que le protocole BGP seul ne gère pas. Cette variante du protocole est utilisée pour supporter certaines technologies comme MPLS-VPN, pour Multi Protocol Label Switching Virtual Private Network, ou encore Multicast. Il existe encore d'autres variantes du protocole BGP, comme par exemple e-BGP utilisé entre routeurs appartenant à des systèmes autonomes différents, i-BGP utilisé entre routeurs appartenant au même système autonome, ou encore MP-BGP utilisé pour le transport des adresses IPv6, Multicast ou MPLS VPN.

La présente invention s'applique à tous les réseaux basés sur de tels protocoles.

La présente invention peut être mise en oeuvre dans des réseaux unifiés ainsi que dans des réseaux comprenant plusieurs domaines administratifs. Elle peut s'appliquer dans des réseaux interconnectés à un réseau de type Internet, ou encore dans des réseaux utilisés à des fins privées.

L'invention couvre une configuration dans laquelle tous les routeurs du réseau mettent en oeuvre avantageusement un procédé selon un mode de réalisation de l'invention. Toutefois, une configuration dans laquelle un des routeurs ou une partie seulement des routeurs du réseau met en oeuvre un mode de réalisation de l'invention s'avère déjà être très avantageuse.

Un mode de réalisation de l'invention est basé sur un protocole de routage de type BGP.

Dans un mode de réalisation de l'invention, un routeur maintient des tables de routage contenant des informations de routage et de connectivité échangées avec des routeurs voisins via le protocole de routage.

Les termes « routeur voisin » d'un routeur donné font référence à un routeur ayant une session selon le protocole de routage du réseau avec le routeur donné.

Un tel protocole de routage spécifie des messages suivants:
- un message d'ouverture de session, noté 'OPEN' ;
- un message de mise à jour des informations de routage et/ou de connectivité ; noté 'UPDATE', certains de ces messages permettent d'ajouter des informations de routage dans des tables de routage, d'autres de ces messages permettent de retirer des informations de routage, ces derniers sont appelés par la suite messages de mise à jour de retrait ;
- un message de notification de différents états des sessions, noté 'NOTIFICATION', ce dernier message est notamment utilisé pour fermer une session.

Le protocole de routage selon un mode de réalisation de l'invention permet de transporter plusieurs types d'adresses, comme par exemple dans un réseau IP des adresses de type IP Version 4, IP Version 6, ou des adresses de type Multicast ou encore de type MPLS-VPN.

Un routeur selon un mode de réalisation de l'invention maintient une première table de routage contenant des informations de routage et/ou de connectivité envoyées à un ou plusieurs routeurs voisins et une seconde table de routage contenant des informations de routage et/ou de connectivité reçues depuis un ou plusieurs routeurs voisins, via le protocole de routage du réseau. De telles tables sont respectivement nommées par la suite 'table de sortie' et 'table d'entrée'.

L'invention couvre également une configuration dans laquelle un routeur maintient une table d'entrée et une table de sortie pour chacune des sessions de protocole de routage qu'il maintient. Toutefois, par souci de clarté, un routeur gère uniquement une table d'entrée et une table de sortie par la suite. Les informations de routage et/ou de connectivité comprises dans ces tables permettent au routeur de déterminer des chemins de transmission des paquets.

Dans un mode de réalisation de l'invention, lorsqu'un routeur a une ou plusieurs sessions selon le protocole de routage, on peut fermer tout ou partie de ces sessions en réduisant le nombre de paquets perdus.

En effet, dans un premier cas, on peut fermer une partie d'une session donnée du routeur, par exemple correspondant à une famille d'adresses de la session. Ainsi, le routeur parcourt sa table de sortie et liste les informations de routage et/ou de connectivité correspondant à la partie de la session. Ensuite, il parcourt sa table d'entrée et liste les informations de routage et/ou de connectivité correspondant à la partie de la session. Puis, il envoie un message de mise à jour de retrait comprenant les informations ainsi listées aux routeurs voisins. Un tel message indique aux routeurs qu'ils doivent considérer les chemins correspondant aux informations envoyées dans le message de mise à jour de retrait comme hors service.

Dans un deuxième cas, on peut fermer une session complète du routeur. Ainsi, le routeur parcourt sa table de sortie et liste les informations de routage et/ou de connectivité correspondant à la session. Ensuite, il parcourt sa table d'entrée et liste les informations de routage et/ou de connectivité correspondant à la session. Puis, il envoie un message de mise à jour de retrait comprenant les informations ainsi listées aux routeurs voisins. Un tel message indique aux routeurs qu'ils doivent considérer les chemins correspondant aux informations envoyées dans le message de mise à jour de retrait comme hors service.

Dans un troisième cas, on peut fermer un groupe de sessions du routeur. Ainsi, le routeur parcourt sa table de sortie et liste les informations de routage et/ou de connectivité correspondant au groupe de sessions. Ensuite, il parcourt sa table d'entrée et liste les informations de routage et/ou de connectivité correspondant au groupe de sessions. Puis, il envoie un message de mise à jour de retrait comprenant les informations ainsi listées aux routeurs voisins. Un tel message indique aux routeurs qu'ils doivent considérer les chemins correspondant aux informations envoyées dans le message de mise à jour de retrait comme hors service.

Dans un quatrième cas, on peut également fermer toutes les sessions du routeur. Cette opération est plus simple que les précédentes. En effet, dans ce cas, seule la table de sortie est parcourue de préférence. Les informations de routage et/ou de connectivité correspondant à toutes les sessions sont listées puis envoyées aux routeurs voisins. Un tel message indique aux routeurs qu'ils doivent considérer les chemins correspondant aux informations envoyées dans le message de mise à jour de retrait comme hors service.

Entre le moment où le message de mise à jour de retrait est envoyé et le moment où les routeurs destinataires du message traitent les informations reçues et de ce fait cessent de transmettre des paquets sur les chemins considérés comme hors service, c'est-à-dire pendant le temps de convergence de re-routage, le routeur continue de transmettre les paquets reçus sur les chemins considérés comme hors service.

Puis, lorsqu'un critère déterminé est rempli, dans le premier cas la partie des sessions est fermée, dans le deuxième cas la session complète est fermée, dans le troisième cas le groupe de sessions est fermé et enfin dans le quatrième cas toutes les sessions sont fermées.

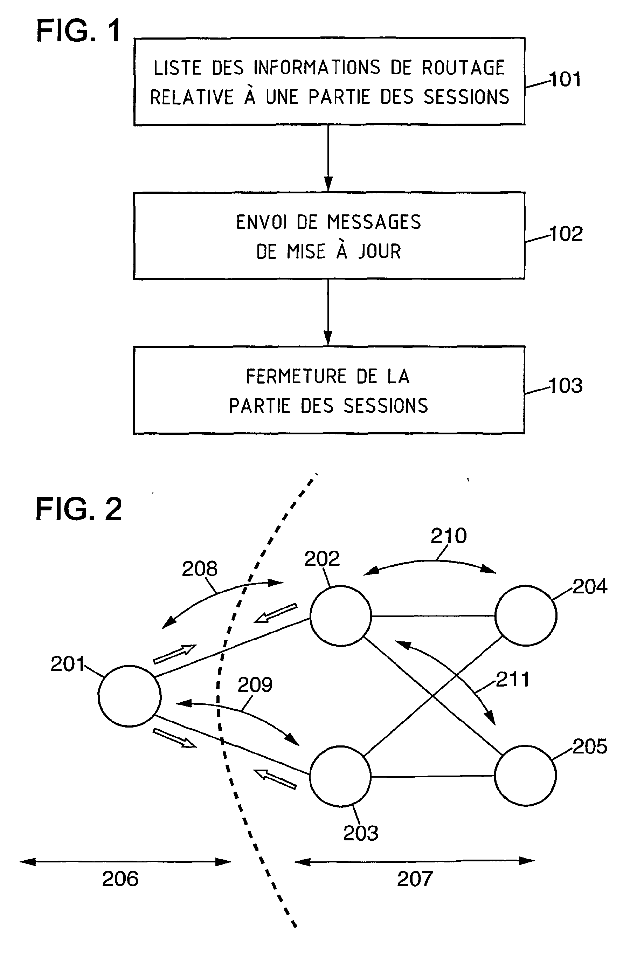

La figure 1, illustre les principales étapes d'un procédé de contrôle de session selon un mode de réalisation de l'invention. En une première étape 101, on liste des informations de routage relatives à une partie des sessions. En une deuxième étape 102, on envoie un message de mise à jour de retrait contenant les informations précédemment listées. Et en une troisième étape 103, on ferme la partie des sessions du routeur.

De préférence, une partie de session, une session complète, un groupe de sessions ou encore toutes les sessions d'un routeur sont fermées via l'envoi d'un message 'NOTIFICATION' correspondant.

La figure 2 illustre une architecture de réseau de routeurs dans un mode de réalisation de la présente invention. Le réseau de routeurs comprend deux domaines administratifs 206 et 207. Un routeur 202 a une session 210 dans le même domaine administratif avec un routeur 204 et une session 211 avec un routeur 205. Le routeur 202 a également une session 208 avec un routeur 201 du domaine administratif 206. Puis le routeur 201 a une session 209 avec un routeur 203.

On souhaite éteindre le routeur 202 pour réaliser une maintenance globale par exemple et de ce fait fermer toutes les sessions du routeur 202. Une extinction brutale du routeur 202 entraînerait la perte de paquets transmis à ce routeur pendant le temps de convergence du protocole de routage.

Dans un mode de réalisation de l'invention, lorsque le routeur 202 est informé d'une fermeture de toutes ses sessions selon le protocole de routage, il parcourt sa table de sortie. Il sélectionne des informations de routage et de connectivité correspondant à toutes les sessions qu'il a, c'est-à-dire les sessions 208, 210 et 211. Puis, il envoie des messages de mise à jour de retrait selon le protocole de routage aux routeurs voisins référencés 201, 204 et 205, c'est-à-dire aux routeurs avec lesquels il a une session selon le protocole de routage. De tels messages de mise à jour de retrait contiennent les informations ainsi sélectionnées de routage et/ou de connectivité.

Puis, de préférence, après avoir informé les routeurs voisins qu'ils devaient considérer comme hors service les informations de routage et/ou de connectivité contenues dans les messages de mise à jour de retrait, le routeur 202 contrôle si le critère déterminé est rempli.

Sur réception de tels messages de mise à jour de retrait, les routeurs 201, 204 et 205 mettent à jour leurs tables de routages respectives et de ce fait re-routent les paquets initialement routés vers le routeur 202, vers d'autres routeurs. Ainsi, par exemple, le routeur 201 re-route des paquets initialement routés vers le routeur 202 vers le routeur 203.

Lorsque le routeur 202 détecte que le critère déterminé est rempli, il ferme toutes ces sessions. Plusieurs critères déterminés sont détaillés ci-après.

Le routeur peut utiliser un critère déterminé correspondant au nombre de paquets émis sur des chemins considérés hors service sensiblement nul. Dans ce cas, la partie des sessions ou toutes les sessions sont fermées uniquement après que l'on détecte que le nombre de paquets émis sur des chemins considérés hors service est sensiblement nul.

On peut également utiliser un critère déterminé correspondant à l'expiration d'un temporisateur. Dans ce cas, on estime que le nombre de paquets émis transitant sur des chemins considérés hors service est sensiblement nul en prenant pour hypothèse qu'après un certain temps, plus aucun paquet ne transite par les chemins correspondant aux informations de routage et/ou de connectivité envoyées dans les messages de mise à jour de retrait. Ce temps correspond de préférence sensiblement à un temps de latence introduit par le temps de transmission des messages de mise à jour de retrait depuis le routeur 202 jusqu'aux routeurs voisins 201, 204 et 205, et par le temps de traitement de ces messages par les routeurs voisins.

Ainsi, dans ce cas, de préférence, le routeur 202 gère un temporisateur. Sur expiration de ce temporisateur, le routeur estime qu'il n'y a plus de trafic détecté sur les chemins correspondant, et que donc le nombre de paquets à router est sensiblement nul.

Un tel temporisateur peut être armé avant l'émission des messages de mise à jour de retrait. Il peut également être armé après l'envoi des messages de mise à jour de retrait.

De plus, un routeur peut gérer une durée globale de temporisateur pour tout le routeur. Il peut également gérer une durée de temporisateur correspondant à un groupe de sessions. Il peut gérer une durée de temporisateur correspondant à une session complète ou encore une durée de temporisateur correspondant à une partie de sessions.

La présente invention couvre toutes autres méthodes permettant d'estimer que le nombre de paquets transmis au routeur sur des chemins considérés comme hors service est sensiblement nul.

Dans un mode de réalisation de l'invention, on initie une maintenance partielle ou totale d'un routeur. Le routeur informé d'une maintenance partielle ou totale, ferme la partie des sessions correspondant à la maintenance partielle initiée, ou bien à la maintenance totale, suivant un procédé de gestion de session selon un mode de réalisation de l'invention. Une maintenance partielle peut correspondre à la fermeture d'une partie d'une session, d'une session complète ou encore d'un groupe de sessions complètes, et une maintenance totale correspond à la fermeture de toutes les sessions.

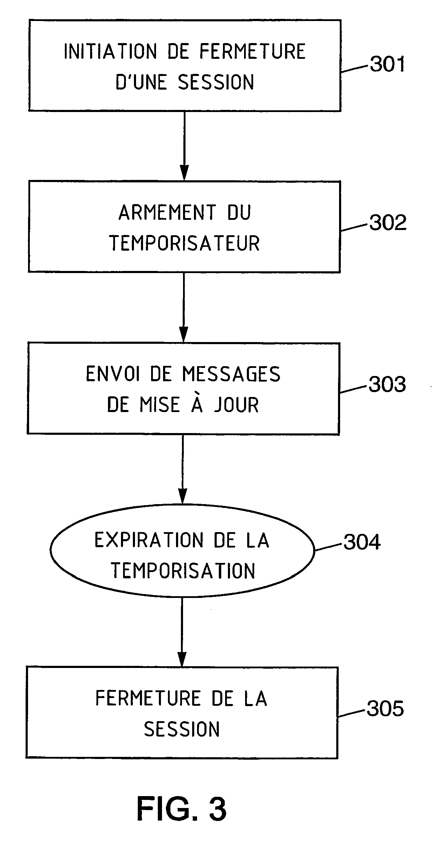

La figure 3 illustre un procédé de gestion de fermeture d'une session complète de protocole de routage selon un mode de réalisation de l'invention, dans lequel le routeur se base sur l'expiration d'un temporisateur pour estimer que le trafic transitant via les chemins considérés comme hors service est nul.

Un système de configuration et de gestion du routeur permet généralement d'indiquer au routeur qu'une maintenance d'une session complète par exemple va être réalisée. Ainsi informé, le routeur initie une fermeture de session dans une étape 301. Dans une étape 302, le routeur arme un temporisateur. Dans une étape 303, le routeur envoie des messages de mise à jour de retrait aux routeurs voisins, comprenant des informations de routage et/ou de connectivité correspondantes à la session. L'expiration du temporisateur dans l'étape 304, déclenche la fermeture de la session par le routeur dans une étape 305.

Dans un mode de réalisation de la présente invention, le système de configuration et de gestion du routeur permet de préférence d'entrer une commande qui implique l'interruption de tout ou partie des sessions du routeur. Un tel système permet également de configurer une valeur du temporisateur tel que défini précédemment. On obtient notamment des résultats intéressants avec un temporisateur dont la valeur est de 300 secondes.

De plus, de préférence, le routeur présente deux modes de gestion d'une fermeture de tout ou partie des sessions. Dans un premier mode, il ferme tout ou partie des sessions de telle façon que la perte de paquets soit réduite, comme cela a été décrit précédemment. Dans un second mode, il ferme tout ou partie des sessions de manière plus brutale, comme dans les procédés de gestion de fermeture de session déjà connus. Le système de configuration configure le mode de gestion qu'il souhaite que le routeur réalise.

L'invention permet donc de réduire la perte de trafic lors d'une maintenance programmée sur un routeur implémentant un protocole de routage de type BGP. Elle peut être mise en oeuvre sur un seul ou sur plusieurs routeurs du réseau puisqu'un routeur selon un mode de réalisation de l'invention peut fonctionner avec un routeur ne mettant pas en oeuvre un procédé de gestion selon l'invention. En effet, les messages définis par le protocole de routage du réseau ne sont de préférence pas modifiés.

Dans un mode de réalisation de la présente invention, seule la séquence des messages émis lors de la gestion d'une fermeture d'une partie de session, d'une session complète, d'un groupe de session ou encore de toutes les sessions d'un routeur est avantageusement modifiée, les messages du protocole de gestion n'étant pas modifiés. Ainsi un mode de réalisation de la présente invention est facile à mettre en oeuvre dans des réseaux de routeurs existants.

## Revendications

1. Procédé de contrôle de session selon un protocole de routage de type BGP dans un réseau de transmission de paquets (206, 207) comprenant une pluralité de routeurs (201-205) ayant entre eux des sessions selon ledit protocole pour échanger des informations de routage et/ou de connectivité indiquant des chemins pour transmettre des paquets à travers le réseau, dans lequel chacun desdits routeurs maintient une table de sortie comprenant des informations de routage et/ou de connectivité envoyées à un autre desdits routeurs via ledit protocole, et une table d'entrée comprenant des informations de routage et/ou de connectivité reçues depuis un autre desdits routeurs via ledit protocole,
ledit procédé comprenant les étapes suivantes pour fermer au moins une partie des sessions d'un routeur donné :
- lister (101) les informations de routage et/ou de connectivité correspondant à ladite partie des sessions et contenues dans l'une au moins des tables d'entrée et de sortie ;
- envoyer (102) un message de mise à jour selon ledit protocole à des routeurs voisins comprenant les informations de routage et/ou de connectivité listées et indiquant que les chemins correspondant auxdites informations envoyées sont considérés hors service;
- fermer (103) ladite partie des sessions ;
et dans lequel ledit routeur continue de transmettre des paquets émis sur lesdits chemins considérés hors service jusqu'à l'étape de fermeture.

2. Procédé selon la revendication 1, dans lequel on ferme la partie des sessions lorsqu'un critère déterminé est rempli.

3. Procédé selon la revendication 2, dans lequel le critère déterminé est une détection d'un nombre sensiblement nul de paquets émis sur les chemins considérés hors service.

4. Procédé selon la revendication 2, dans lequel le critère déterminé est l'expiration (304) d'un temporisateur armé avant ou après l'étape d'envoi de message de mise à jour (302).

5. Procédé selon l'une quelconque des revendications précédentes, dans lequel la partie des sessions du routeur est définie par une famille d'adresses donnée.

6. Procédé selon l'une quelconque des revendications précédentes, ledit procédé comprenant en outre pour un routeur donné l'étape suivante avant l'étape consistant à lister les informations de routage et/ou de connectivité :
- initier une maintenance correspondant à une partie donnée des sessions du routeur;
et comprenant l'étape suivante après l'étape consistant à fermer la partie des sessions :
- réaliser ladite maintenance.

7. Routeur (201-205) selon un protocole de routage de type BGP dans un réseau de transmission de paquets comprenant une pluralité de routeurs (201-205) ayant entre eux des sessions selon ledit protocole pour échanger des informations de routage et/ou de connectivité indiquant des chemins pour transmettre des paquets à travers le réseau,
ledit routeur comprenant :
- des moyens pour maintenir une table de sortie comprenant des informations de routage et/ou de connectivité envoyées à un autre desdits routeurs via ledit protocole, et une table d'entrée comprenant des informations de routage et/ou de connectivité reçues depuis un autre desdits routeurs via ledit protocole ;
- des moyens adaptés pour lister (101) des informations de routage et/ou de connectivité correspondant à une partie des sessions à fermer, lesdites sessions à fermer étant contenues dans l'une au moins des tables d'entrée et de sortie ;
- des moyens adaptés pour envoyer (102) un message de mise à jour selon ledit protocole à des routeurs voisins comprenant les informations de routage et/ou de connectivité listées et indiquant que les chemins correspondant auxdites informations envoyées sont considérés hors service;
- des moyens pour fermer (103) ladite partie des sessions ; et
- des moyens de transmission adaptés pour continuer de transmettre des paquets émis sur lesdits chemins considérés hors service jusqu'à ce que lesdits moyens de fermeture ferment ladite partie des sessions.

8. Système de gestion de session selon un protocole de routage dans un réseau de transmission de paquets (206, 207), ledit système de gestion comprenant une pluralité de routeurs (201-205) selon la revendication 7.

## Claims

1. Session control method according to a routing protocol of the BGP type in a packet transmission network (206, 207) comprising a plurality of routers (201-205) having sessions between them according to said protocol for exchanging routing and/or connectivity information indicating paths for transmitting packets over the network, wherein each of said routers maintains an output table containing routing and/or connectivity information sent to another of said routers via said protocol, and an input table containing routing and/or connectivity information received from another of said routers via said protocol,
said method comprising the following steps for closing at least a part of the sessions of a given router:
- listing (101) the routing and/or connectivity information corresponding to said part of the sessions and contained in at least one of the input and output tables;
- sending (102) an update message according to said protocol to adjacent routers comprising the listed routing and/or connectivity information and indicating that the paths corresponding to said sent information are considered to be out of service;
- closing (103) said part of the sessions;
and wherein said router continues to transmit packets sent over said paths considered to be out of service until the closure step.

2. Method according to Claim 1, wherein the part of the sessions is closed when a predetermined criterion is satisfied.

3. Method according to Claim 2, wherein the predetermined criterion is a detection of a substantially zero number of packets sent over the paths considered to be out of service.

4. Method according to Claim 2, wherein the predetermined criterion is the expiry (304) of a timer armed before or after the step for sending update messages (302).

5. Method according to any one of the preceding claims, wherein the part of the sessions of the router is defined by a given family of addresses.

6. Method according to any one of the preceding claims, wherein said method furthermore comprises for a given router the following step before the step consisting in listing the routing and/or connectivity information:
- initiating maintenance corresponding to a given part of the sessions of the router;
and comprising the following step after the step consisting in closing the part of the sessions:
- performing said maintenance.

7. Router (201-205) based on a routing protocol of the BGP type in a packet transmission network comprising a plurality of routers (201-205) having sessions between them according to said protocol for exchanging routing and/or connectivity information indicating paths for transmitting packets over the network,
said router comprising:
- means for maintaining an output table containing routing and/or connectivity information sent to another of said routers via said protocol, and an input table containing routing and/or connectivity information received from another of said routers via said protocol;
- appropriate means for listing (101) routing and/or connectivity information corresponding to a part of the sessions to be closed, said sessions to be closed being contained in at least one of the input and output tables;
- appropriate means for sending (102) an update message according to said protocol to adjacent routers comprising the listed routing and/or connectivity information and indicating that the paths corresponding to said sent information are considered to be out of service;
- means for closing (103) said part of the sessions; and
- appropriate transmission means for continuing to transmit packets sent over said paths considered to be out of service until said closure means close said part of the sessions.

8. Session management system based on a routing protocol in a packet transmission network (206, 207), said management system comprising a plurality of routers (201-205) according to Claim 7.

## Patentansprüche

1. Verfahren zur Sitzungskontrolle gemäß einem Routingprotokoll vom Typ BGP in einem Paketübertragungsnetz (206, 207) mit mehreren Routern (201-205), die zwischen sich Sitzungen gemäß dem Protokoll haben, um Routing- und/oder Konnektivitätsinformationen auszutauschen, die Wege angeben, um Pakete über das Netz zu übertragen, bei dem jeder der Router eine Ausgangstabelle, die Routing- und/oder Konnektivitätsinformationen enthält, die an einen anderen der Router über das Protokoll gesendet werden, und eine Eingangstabelle unterhält, die Routing- und/oder Konnektivitätsinformationen enthält, die von einem anderen der Router über das Protokoll empfangen wurden,
wobei das Verfahren die folgenden Schritte aufweist, um mindestens einen Teil der Sitzungen eines gegebenen Routers zu schließen:
- Auflisten (101) der Routing- und/oder Konnektivitätsinformationen, die dem Teil der Sitzungen entsprechen und in mindestens einer der Eingangs- und Ausgangstabellen enthalten sind;
- Senden (102) einer Aktualisierungsmitteilung gemäß dem Protokoll an benachbarte Router, die die aufgelisteten Routing- und/oder Konnektivitätsinformationen enthält und angibt, dass die den gesendeten Informationen entsprechenden Wege als außer Betrieb angesehen werden;
- Schließen (103) des Teils der Sitzungen;
und bei dem der Router bis zum Schritt des Schließens fortfährt, auf den als außer Betrieb angesehenen Wegen gesendete Pakete zu übertragen.

2. Verfahren nach Anspruch 1, bei dem der Teil der Sitzungen geschlossen wird, wenn ein bestimmtes Kriterium erfüllt ist.

3. Verfahren nach Anspruch 2, bei dem das bestimmte Kriterium eine Erfassung einer Anzahl im Wesentlichen Null von auf den als außer Betrieb angesehenen Wegen gesendeten Paketen ist.

4. Verfahren nach Anspruch 2, bei dem das bestimmte Kriterium der Ablauf (304) einer Zeitschaltung ist, die vor oder nach dem Schritt des Sendens einer Aktualisierungsmitteilung (302) gestartet wird.

5. Verfahren nach einem der vorhergehenden Ansprüche, bei dem der Teil der Sitzungen des Routers durch eine gegebene Adressenfamilie definiert wird.

6. Verfahren nach einem der vorhergehenden Ansprüche, wobei das Verfahren außerdem für einen gegebenen Router den folgenden Schritt vor dem Schritt aufweist, der darin besteht, die Routing- und/oder Konnektivitätsinformationen aufzulisten:
- Einleiten einer Wartung entsprechend einem gegebenen Teil der Sitzungen des Routers;
und den folgenden Schritt nach dem Schritt aufweist, der darin besteht, den Teil der Sitzungen zu schließen:
- Durchführen der Wartung.

7. Router (201-205) gemäß einem Routingprotokoll vom Typ BGP in einem Paketübertragungsnetz, das mehrere Router (201-205) aufweist, die zwischen sich Sitzungen gemäß dem Protokoll haben, um Routing- und/oder Konnektivitätsinformationen auszutauschen, die Wege angeben, um Pakete über das Netz zu übertragen,
wobei der Router aufweist:
- Mittel, um eine Ausgangstabelle, die Routing- und/oder Konnektivitätsinformationen enthält, die an einen anderen der Router über das Protokoll gesendet werden, und eine Eingangstabelle zu unterhalten, die Routing- und/oder Konnektivitätsinformationen enthält, die von einem anderen der Router über das Protokoll empfangen wurden;
- Mittel, die geeignet sind, um Routing- und/oder Konnektivitätsinformationen aufzulisten (101), die einem Teil der zu schließenden Sitzungen entsprechen, wobei die zu schließenden Sitzungen in mindestens einer der Eingangs- und Ausgangstabellen enthalten sind;
- Mittel, die geeignet sind, um eine Aktualisierungsmitteilung gemäß dem Protokoll an benachbarte Router zu senden (102), die die aufgelisteten Routing- und/oder Konnektivitätsinformationen enthält und angibt, dass die den gesendeten Informationen entsprechenden Wege als außer Betrieb angesehen werden;
- Mittel, um den Teil der Sitzungen zu schließen (103); und
- Übertragungsmittel, die geeignet sind, um fortzufahren, gesendete Pakete auf den als außer Betrieb angesehenen Wegen zu übertragen, bis die Schließmittel den Teil der Sitzungen schließen.

8. System zur Sitzungsverwaltung gemäß einem Routingprotokoll in einem Paketübertragungsnetz (206, 207), wobei das Verwaltungssystem mehrere Router (201-205) nach Anspruch 7 aufweist.
